# EUROPÄISCHE PATENTSCHRIFT

(11) **EP 3 894 831 B1**
(45) Veröffentlichungstag und Bekanntmachung des Hinweises auf die Patenterteilung: **06.09.2023**
(21) Anmeldenummer: 19794137.0
(22) Anmeldetag: 23.10.2019
(51) Int. Cl.: G01N 15/06, G01N 15/14

(54) **VERFAHREN ZUR VERARBEITUNG DES SIGNALS EINES PARTIKELSENSORS, DER NACH DEM PRINZIP DER LASERINDUZIERTEN INKANDESZENZ ARBEITET, ANORDNUNG ZUR VERARBEITUNG EINES SOLCHEN SIGNALS, SOWIE PARTIKELSENSOR**
METHOD FOR PROCESSING THE SIGNAL OF A PARTICLE SENSOR THAT OPERATES IN ACCORDANCE WITH THE PRINCIPLE OF LASER-INDUCED INCANDESCENCE, ASSEMBLY FOR PROCESSING SUCH A SIGNAL, AND PARTICLE SENSOR
PROCÉDÉ DE TRAITEMENT DU SIGNAL D'UN CAPTEUR DE PARTICULES FONCTIONNANT SELON LE PRINCIPE DE L'INCANDESCENCE INDUITE PAR LASER, SYSTÈME DE TRAITEMENT D'UN TEL SIGNAL, ET CAPTEUR DE PARTICULES

(30) Priorität: 13.12.2018 DE 102018221701
(43) Veröffentlichungstag der Anmeldung: 20.10.2021
(73) Patentinhaber: Robert Bosch GmbH, 70442 Stuttgart (DE)
(72) Erfinder: RUSANOV, Radoslav, 70499 Stuttgart (DE); SCHREIBER, Markus, 71706 Markgroeningen (DE); CURCIC, Michael, 70563 Stuttgart (DE); SCHOLL, Michael, 71522 Backnang (DE)
(86) Internationale Anmeldenummer: PCT/EP2019/078891
(87) Internationale Veröffentlichungsnummer: WO 2020/119988

(56) Entgegenhaltungen:
- US-A- 5 873 054
- US-A1- 2017 016 820
- US-B2- 7 652 260

## Beschreibung

### Stand der Technik

Die Erfindung betrifft ein Verfahren zur Verarbeitung des Signals eines Partikelsensors, der nach dem Prinzip der laserinduzierten Inkandeszenz arbeitet, eine Anordnung zur Verarbeitung eines solchen Signals, sowie einen Partikelsensor nach den Oberbegriffen der nebengeordneten Ansprüche.

Das Prinzip der laserinduzierten Inkandeszenz ("LII") ist zur Detektion von Nanopartikeln in einem Gas, beispielsweise in Luft, bereits seit längerem bekannt und wird z.B. auch für die Charakterisierung des Verbrennungsprozesses in "gläsernen" Motoren im Labor oder für die Abgas-Charakterisierung in Laborumgebungen intensiv angewandt. Dabei werden die Partikel, beispielsweise Rußpartikel, mit einem Laser auf mehrere Tausend Grad Celsius erhitzt, so dass sie signifikant Wärme- bzw. Temperaturstrahlung emittieren. Diese thermisch induzierte Lichtemission der Partikel wird mit einem Lichtdetektor gemessen. Ein optischer Rußpartikelsensor für Kraftfahrzeuge, der nach dem Prinzip der laserinduzierten Inkandeszenz arbeitet, ist in der DE 10 2017 207 402 A1 beschrieben.

Partikelsensoren und die Verarbeitung von Ausgangssignalen sind ferner in der

US 2017/016820 A1, der US 5 873 054 A und der US 7652 260 B2 offenbar Die US2017/016820 A1 beschreibt ein Verfahren zur Verarbeitung des Ausgangssignals eines Partikelsensors, der nach dem Prinzip der laserinduzierten Inkandeszenz arbeitet, welches die Schritte umfasst: Bereitstellen eines Ausgangssignals an einem Detektor, welches eine von dem Detektor erfasste Temperaturstrahlung charakterisiert; Bereitstellen eines Ausgangssignals durch den Detektor, wobei das Ausgangssignal eine Mehrzahl von Pulsen umfasst; wenigstens zeitweise Zuführen des Ausgangssignals zu einem Summierer. Die US 5 873 054 A ist in der Lage, einen Signalstapelung zu erkennen, entscheidet sich aber dafür, ihn zu ignorieren, und wählt, die zugehörigen Messungen zu verwerfen. Die US 7652 260 B2 versucht, das Phänomen der Signalstapelung zu verzögern.

### Offenbarung der Erfindung

Das der Erfindung zugrunde liegende Problem wird gelöst durch ein Verfahren mit den Merkmalen des Anspruchs 1. Vorteilhafte Weiterbildungen sind in Unteransprüchen angegeben.

Das erfindungsgemäße Verfahren dient zur Detektion von Partikeln oder Aerosol in einem Fluid, beispielsweise einem Abgas. Er arbeitet unter Verwendung des Prinzips der laserinduzierten Inkandeszenz (LII). Dabei wird zunächst mit Laserlicht, welches von einem Laser ausgeht und vorzugsweise in einem Spot, also einem Volumenbereich mit kleinsten Abmessungen im µm-Bereich, mit genügend hoher Intensität gebündelt ist, ein Partikel durch teilweise Absorption des Laserlichts auf mehrere tausend Grad erhitzt. Dieser heiße Partikel gibt nach dem Planck'schen Strahlungsgesetz eine charakteristische Temperaturstrahlung ab (Inkandeszenz bzw. Glühemission), welche als Messsignal dient und mit einem Detektor empfangen wird.

Zu diesem Zweck wird beispielsweise ein im Strahlengang des Lasers angeordnetes optisches Element verwendet, das dazu ausgebildet und eingerichtet ist, das von dem Laser ausgehende Laserlicht in dem sehr kleinen Spot zu bündeln. Bei einem Fokusdurchmesser von z.B. 10 µm kann davon ausgegangen werden, dass zu einem gegebenen Zeitpunkt immer nur ein Partikel den Spot durchfliegt (intrinsische Einzelpartikel-Detektierbarkeit), wenn man eine Partikelkonzentration von 10¹³/m³ zu Grunde legt. Der Detektor ist so eingerichtet und angeordnet, dass er die vom Spot ausgehende Temperaturstrahlung detektiert. Als Laser können kostengünstige Halbleiterlaserdioden eingesetzt werden. Die Detektion der Temperaturstrahlung erfolgt mittels eines Multi-Pixel-Photon-Counters (MPPC) oder eines Silicon-Photon-Multipliers (SiPM).

Zu dem erfindungsgemäßen Verfahren gehören folgende Schritte::
a. Bereitstellen eines Ausgangssignals durch den Detektor, wobei das Ausgangssignal eine Mehrzahl von Pulsen umfasst, und
b. wenigstens zeitweise: Zuführen des Ausgangssignals zu einem Summierer, und
c. Summieren des Ausgangssignals durch den Summierer über ein Zeitintervall.

Zu der erfindungsgemäßen Anordnung gehört es, dass
a. der Detektor so ausgebildet und eingerichtet ist, dass er ein Ausgangssignal bereitstellt, welches eine Mehrzahl von Pulsen umfasst, und
b. die Anordnung einen Summierer umfasst, dem das Ausgangssignal wenigstens zeitweise zugeführt wird und der so ausgebildet und eingerichtet ist, dass er das Ausgangssignal über ein Zeitintervall summiert.

Der Einsatz eines MPPC- oder SiPM-Detektors sorgt für die nötige Empfindlichkeit bzgl. der Lichtmenge auch kleinster Partikel (z.B. im Bereich von 10-30nm, beispielsweise 23nm oder 10nm Durchmesser), da diese eine Leistung von nur wenigen pW auf die aktive Detektorfläche werfen. Ein solcher Detektor detektiert einzelne Photonen mit einer Nachweiseffizienz von beispielsweise wenigen % bis zu 50% (je nach Ausführung und je nach der Wellenlänge des Photons). Dabei erzeugt das Photon einen sehr kurzen Strom- oder Spannungspuls mit einer FWHM von beispielsweise weinigen ns bis einigen 100ns am Ausgang des Detektors. Da in dem Detektor eine interne Verstärkung des Signals erfolgt, kann dieses als einzelnes Ereignis (gegebenenfalls nach weiterer Verstärkung) detektiert werden. Gleichzeitig erzeugt der Detektor auch ohne Lichteinfall vereinzelt Signale durch thermische Anregung (sogenannte "dark counts") mit einer Rate im Kilohertz- bis Megahertz-Bereich. Das Signal des Lichts eines Partikels würde dann als Häufung von Pulsen vor einem gleichmäßigen Hintergrund erscheinen.

Die Detektion der sehr schnellen und kurzen Pulse (gegebenenfalls nur wenige Nanosekunden) stellt dabei eine Herausforderung für die Elektronik dar. Diese muss zusätzlich die Einzelpulse mit Häufigkeiten von bis zu 100 MHz bis 1 GHz verarbeiten können, denn dies entspricht dem Signal eines großen Partikels mit einer Größe beispielsweise von >100 nm. Die vorliegende Erfindung schlägt eine mögliche Signal- und Datenverarbeitungsarchitektur vor, welche die schnelle und effiziente Detektion der Pulse erlaubt, aber auch eine Auswertung der Daten mit vertretbarem Aufwand und geringen Kosten ermöglicht.

Typischerweise setzen MPPC/SiPM-Detektoren auf große SPAD-Pixel (SPAD = Single-Photon-Avalanche-Diode), um eine hohe Detektionseffizienz zu erreichen (kleine Pixel führen zu großen Flächen, die für die Verdrahtung verwendet werden und haben damit relative gesehen eine kleinere effektive Fläche). Solche großen Pixel haben jedoch Signal-FWHMs im Bereich von beispielsweise 50-200 ns, insbesondere etwa 100ns. Trotzdem können dort bei der Detektion von großen Partikeln Signalwiederholraten in der Größenordnung von GHz auftreten

Das erfindungsgemäße Verfahren erlaubt sowohl eine Messung der Anzahl- als auch der Massenkonzentration von Partikeln oder Aerosolen in einem strömenden Fluid, insbesondere von Rußpartikeln im Abgas von Verbrennungsanlagen und Brennkraftmaschinen, beispielsweise von Diesel- und Benzinfahrzeugen. Mit inbegriffen ist hierbei explizit die Fähigkeit zur Einzelpartikeldetektion in einem Prüfvolumen, so dass auch die Partikelgröße aus den Messdaten bestimmt werden kann. Dabei kann das erfindungsgemäße Verfahren für die OBD-Überwachung (OBD = On Board Diagnose) des Zustandes eines Partikelfilters eingesetzt werden. Ein mit dem erfindungsgemäßen Verfahren betriebener Partikelsensor besitzt eine kurze Ansprechzeit und ist quasi sofort nach Aktivierung einsatzbereit.

Gerade in Benzinfahrzeugen ist eine Partikelzahl-Messfähigkeit sowie eine sofortige Einsatzbereitschaft unmittelbar nach dem Start des Fahrzeugs sehr wichtig, da ein Großteil der bei Kraftfahrzeugen mit einer Benzin-Brennkraftmaschine typischerweise emittierten sehr feinen Partikel (wenig Masse, hohe Anzahl) während des Kaltstarts entstehen.

Die Erfindung ermöglicht eine Vereinfachung der Signalauswerte-Elektronik. Dies verbessert die Kosteneffizienz und die thermische Robustheit und macht den Partikelsensor weniger anfällig für ESD (ESD = electrostratic discharge), also für Spannungsdurchschläge und somit elektrische Störeinflüsse. Darüber hinaus führt die Erfindung zu einer Reduktion des Rechenaufwandes in einer Auswerteeinrichtung des Partikelsensors, der die am Ausgang des Summierers erhaltenen Daten zugeführt werden, und sie gestattet eine komplexere Auswertung der Daten und damit eine Steigerung des Informationsgehalts. Außerdem wird der Einsatz aller gängigen MPPCs/SiPMs ermöglicht und damit die Auswahl an Zulieferern vergrößert. Die Auswertung der vom Summierer ausgelesenen Daten in der soeben erwähnten Auswerteeinrichtung kann unter Verwendung von Triggering, Datenfitting, neuronalen Netzwerken, Machine-Learning und/oder KI-Verfahren (KI = Künstliche Intelligenz) erfolgen.

Erfindungsgemäß ist vorgesehen, dass wenigstens zeitweise ein Zeitraum, in dem zwei unmittelbar aufeinander folgende Pulse ausgegeben werden, kleiner ist als die Gesamtbreite der beiden Pulse, so dass es zu einem "pile-up" kommt, und dass der Summierer ein Integrator ist, der das Ausgangssignal über ein Zeitintervall integriert.

Als pile-up bzw. "aufstapeln" wird ganz allgemein der Fall bezeichnet, dass in einem Detektor zwei Detektionsereignisse innerhalb einer Zeit erfolgen, die kürzer als die Zeitdauer (insbesondere die FWHM - FWHM = Full Width at Half Maximum bzw. "Halbwertsbreite") des einzelnen durch das Detektionsereignis erzeugten elektrischen Pulses ist. Bei einem pile-up wird in der Folge nur ein Ereignis mit höherer Pulshöhe statt zweier Ereignisse mit jeweils niedriger Pulshöhe registriert. Die obigen Schritte b und c (Verfahren) werden auch dann, oder gerade dann durchgeführt, wenn das Ausgangssignal ein solches "pile-up" aufweist.

Die Pulse der Einzel-SPADs verschmelzen also am Ausgang des MPPC/SiPM-Detektors zu einem "Berg". Die gesamte Ladung des Berges entspricht dabei der Gesamtladung der einzelnen Pulse, d.h. die Information über die Gesamtanzahl von Pulsen bleibt erhalten.

Daher wird die Ladung am Signalausgang des Detektors vorzugsweise für eine bestimmte Zeit (z.B. 0,5-3µs, beispielsweise 1µs) als Messsignal verwendet, und es werden zumindest in einem solchen Fall nicht die einzelnen Pulse gezählt, sondern es wird über dieses Messsignal ein Integral gebildet. Damit werden auch MPPC/SiPM-Detektoren ohne einen Fast-Output (eine Eigenschaft bestimmter SiPMs, bei denen ein zusätzlicher Ausgang einen besonders kurzes Puls (wenige ns) bei einer Photon-Detektion ausgibt) für die Anwendung bei einem LII-Partikelsensor denkbar.

Grundsätzlich ist es vorteilhaft, wenn das Ausgangssignal des Detektors vor dem Summieren mittels des Summierers durch einen Verstärker verstärkt wird.

Bei einer Weiterbildung wird vorgeschlagen, dass die Dauer des Zeitintervalls variabel ist. Somit kann die Dauer des Zeitintervalls individuell an eine aktuelle Betriebssituation und an ein erwartetes Aufkommen von Rußpartikeln angepasst werden. Hierdurch wird die Verarbeitungseffizienz erhöht.

Bei einer Weiterbildung wird vorgeschlagen, dass der Ausgang des Summierers digital und vorzugsweise parallel ist. Hierdurch wird die Verarbeitung der vom Integrator bereitgestellten Daten vereinfacht.

Bei einer Weiterbildung hierzu wird vorgeschlagen, dass 1 Bit am Ausgang des Summierers höchstens ungefähr dem erwarteten Integral der Spannung bzw. des Stroms eines einzelnen Pulses entspricht, vorzugsweise ungefähr dem erwarteten Integral der Spannung bzw. des Stroms eines halben einzelnen Pulses entspricht. Dies kann durch eine entsprechende Verschaltung sichergestellt werden. Hierdurch wird eine ausreichende Auflösung ermöglicht, was letztendlich eine erweiterte Rauschfilterung gestattet. Vorzugsweise stellt der Summierer am Ausgang dabei ein Signal mit einem Wert im Bereich von maximal ungefähr 4-16 Bit bereit, vorzugsweise im Bereich von ungefähr 8-12 Bit. Diese ergibt sich aus der Puls-Rate typischer Detektoren bei den größten zu detektierenden Partikeln (z.B. ungefähr 1GHz) und einem typischen maximalen Zeitintervall (z.B. ungefähr 1 µs), woraus sich beispielhaft eine maximale Zahl von 1000 Pulsen ergibt oder ein benötigter Wert von 10 Bit (= 1024).

Bei einer Weiterbildung wird vorgeschlagen, dass der Summierer durch ein äußeres Signal zurückgesetzt werden kann, insbesondere nach Ablauf eines bestimmten Zeitintervalls nach einem letzten Zurücksetzen zurückgesetzt werden kann. Hierdurch wird ein Überlaufen des Summierers bzw. die Ausgabe unnötig großer Werte verhindert.

Bei einer Weiterbildung wird vorgeschlagen, dass der Stand des Summierers in zeitlichen Abständen ausgelesen wird, wobei die zeitlichen Abstände fest oder flexibel steuerbar sind. Typischerweise wird der Summierer in zeitlichen Abständen von 0,5-5 µs, insbesondere in zeitlichen Abständen von ungefähr 1 µs ausgelesen. Hierdurch wird die Auswertung vereinfacht.

Bei einer Weiterbildung wird vorgeschlagen, dass aus dem Summierer ausgelesene Daten zunächst einem Puffer zugeführt werden, der permanent ausgelesen wird, insbesondere nach Erhalt einer bestimmten Datenmenge ausgelesen wird. Dabei wäre es beispielsweise denkbar, dass X Zahlen mit Y Bit ein Mal pro Zeiteinheit (beispielsweise 100 Zahlen mit 10 Bit einmal pro 1 µs) ausgelesen werden, und dass eine schnelle Auswertung/Bewertung des gesamten Datenpakets mit einer Frequenz von Z MHz (beispielsweise ungefähr 1 MHz) stattfindet. Dafür wären dann zwar vergleichsweise schnelle und leistungsfähige Rechenelemente notwendig, man hätte aber eine Art "Echtzeit-Verarbeitung".

Bei einer alternativen Weiterbildung wird vorgeschlagen, dass aus dem Summierer ausgelesene Daten zunächst einem Puffer zugeführt werden, eine bestimmte Menge der zuletzt erhaltenen Daten in dem Puffer gespeichert wird, und diese gespeicherte Menge dann als Datenpaket an eine Auswerteeinrichtung ausgegeben wird. Der Puffer könnte beispielsweise die X letzten Werte (beispielsweise ungefähr 100) des Summierers speichern und diese dann als Arbeitspakete an die Auswerteeinrichtung weitergeben. Dies hätte den Vorteil, dass die Auswerteeinrichtung neue Daten vom Puffer mit einer deutlich niedrigeren Frequenz (von z.B. ungefähr 10kHz) bekommt anstatt die Werte des Summierers mit einer viel höheren Frequenz (von z.B. ungefähr 1MHz). Allerdings müssen dann entsprechend größere Datenpakete verarbeitet werden. Diese Weiterbildung hat also den Vorteil, dass zwar vergleichsweise große Datenpakete in der Auswerteeinrichtung verarbeitet werden müssen, dies jedoch nur in bestimmten zeitlichen Abständen, so dass entsprechend geeignete Prozessoren eingesetzt werden können.

Bei einer Weiterbildung wird vorgeschlagen, dass aus dem Summierer ausgelesene Daten einer Auswerteeinrichtung zur Verfügung gestellt werden, welche die erhaltenen Daten in Stufen verarbeitet, wobei in einer ersten Stufe solche Datenpakete identifiziert werden, die eine vorgegebene Eigenschaft aufweisen, und in einer zweiten Stufe nur diese identifizierten Datenpakete ausgewertet werden. Beispielsweise kann eine grobe Vorauswahl der "interessanten" Datenpakete (die beispielsweise mit hoher Wahrscheinlich ein Partikel-Event beinhalten) und eine anschließende aufwändigere Auswertung (d.h. Extraktion der relevanten Informationen) dieser vorausgewählten wenigen Datenpakete erfolgen. Somit werden auch bei vergleichsweise geringer Rechenleistung sehr relevante Informationen über beispielsweise vergleichsweise große Rußpartikel erhalten.

Wie oben erwähnt wurde, kann vor dem Summierer ein Verstärker angeordnet sein, und nach dem Summierer kann ein Puffer angeordnet sein, und nach dem Puffer kann eine Auswerteeinrichtung angeordnet sein. Einzelne oder alle diese Elemente können in einem dedizierte ASIC integriert sein. Hierdurch werden eine hohe Verarbeitungsgeschwindigkeit, eine kleine Baugröße und ein günstiger Preis möglich. Denkbar ist aber auch, dass einzelne Komponenten als diskrete Komponenten oder als Mikro-ASIC ausgeführt sind. Beispielsweise könnten der Verstärker und der Summierer als solche diskrete Komponenten oder als Mikro-ASIC realisiert werden. Denkbar ist ferner, dass einzelne oder alle der oben genannten Komponenten als Software in einem Mikrocontroller bzw. Mikroprozessor ausgeführt sind. Schließlich ist auch vorstellbar, dass einzelne oder alle der oben genannten Komponenten in einem Motorsteuergerät einer Brennkraftmaschine untergebracht sind. Jede der genannten Möglichkeiten hat ihre Vorteile, nämlich günstiger Preis, kleine Bauraum, leichte Applikationsmöglichkeit, etc.

Bei einer Weiterbildung wird vorgeschlagen, dass der Summierer mindestens zwei Eingänge aufweist. Ein solcher Summierer hat also einen Doppel-Eingang, so dass die Signale vom Detektor auf den einen Eingang fließen können, während der andere Eingang ausgewertet wird. Danach wird umgeschaltet, so dass der eine Eingang ausgewertet werden kann, während die Daten an den anderen Eingang fließen. Hierdurch wird die Verarbeitungskapazität des Summierers verbessert.

Nachfolgend werden Ausführungsformen der Erfindung unter Bezugnahme auf die beigefügte Zeichnung erläutert. In der Zeichnung zeigen:
- Figur 1: ein Blockschaltbild zur Erläuterung des Aufbaus eines Partikelsensors, der nach dem Prinzip der laserinduzierten Inkandeszenz arbeitet;
- Figur 2: eine detailliertere Darstellung des Aufbaus des Partikelsensors von Figur 1, einschließlich der Darstellung eines strömenden Fluids, in dem Partikel vorhanden sind;
- Figur 3: ein Blockschaltbild einer Anordnung zur Verarbeitung des Signals des Detektors des Partikelsensors;
- Figur 4: ein Diagramm, in dem eine erste Art eines digitalen Ausgangssignals eines Detektors des Partikelsensors der Figuren 1 und 2 über der Zeit aufgetragen ist;
- Figur 5: ein Diagramm, in dem eine zweite Art eines digitalen Ausgangssignals des Detektors des Partikelsensors der Figuren 1 und 2 über der Zeit aufgetragen ist; und

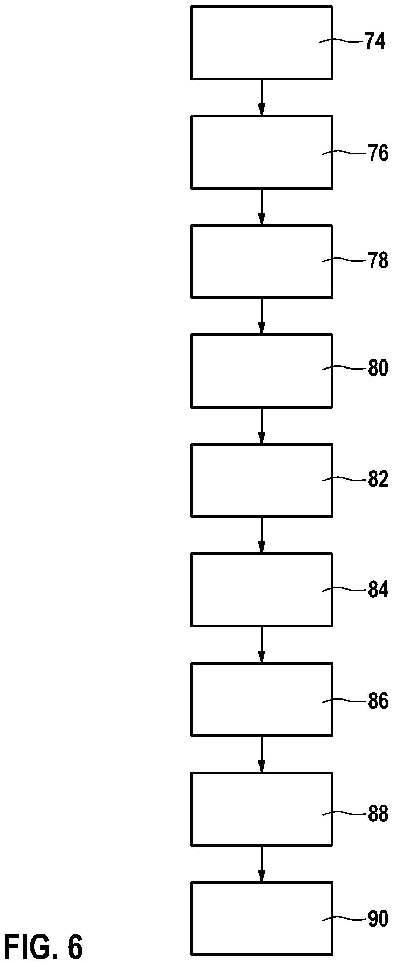

- Figur 6: ein Flussdiagramm eines Verfahrens zur Verarbeitung des digitalen Ausgangssignals des Detektors des Partikelsensors der Figuren 1 und 2.

Funktionsäquivalente Elemente und Bereiche tragen in der nachfolgenden Beschreibung die gleichen Bezugszeichen.

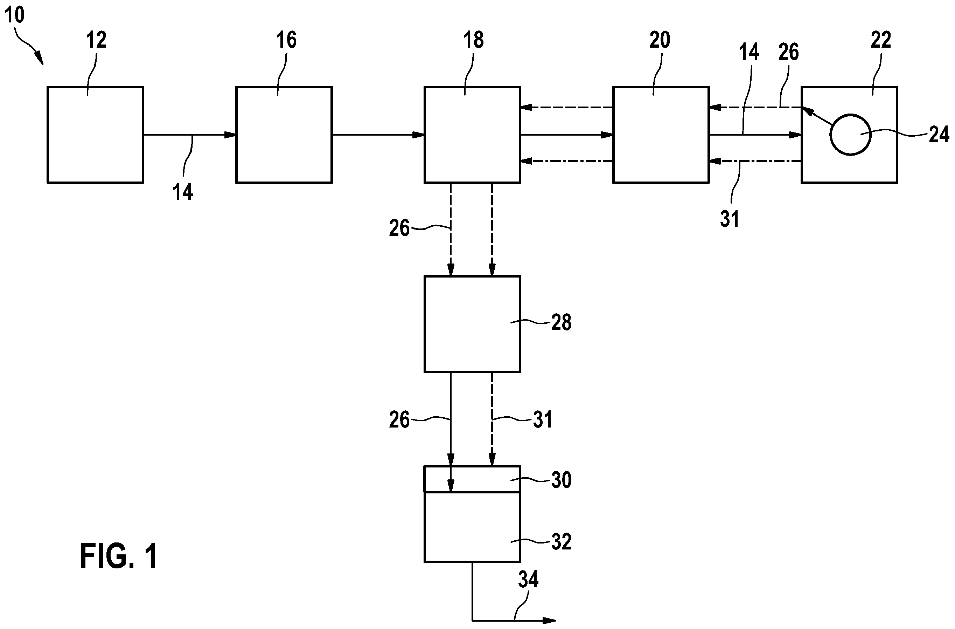

Figur 1 zeigt ein Blockschaltbild einer möglichen Ausführungsform eines Partikelsensors 10. Man erkennt zunächst einen Laser12, vorliegend beispielhaft einen CW-Laser (CW = continuous wave, also "Dauerstrich"), der Laserlicht 14 emittiert. Der Laser 12 kann insbesondere eine Laserdiode aufweisen, was sehr kostengünstig ist. Das Laserlicht 10 wird durch eine Linse 16 zunächst zu einem parallelen Strahl geformt, der durch einen Strahlteiler 18 beispielsweise in Form eines Beamsplitters oder eines dichroitischen Spiegels hindurchtritt. Von dort gelangt er zu einer Linse 20 und weiter in fokussierter Form zu einem Spot 22. Als Spot 22 wird hier ein Volumenelement mit sehr kleinen Abmessungen im µm-Bereich oder sogar im nm-Bereich verstanden.

Laserlicht 14 hoher Intensität kann im Spot 22 auf einen dort vorhandenen Partikel 24 treffen, beispielsweise einen Rußpartikel im Abgasstrom einer Brennkraftmaschine (nicht dargestellt). Die Intensität des Laserlichts 24 ist im Spot 22 so hoch, dass die vom Partikel 24 absorbierte Energie des Laserlichtes 14 den Partikel 24 auf mehrere Tausend Grad Celsius erhitzt (nur im Volumen des Spots 22 erreicht die Intensität des Laserlichts 14 die für laserinduzierte Inkandeszenz notwendigen hohen Werte). Als Folge der Erhitzung emittiert der Partikel 24 spontan und im Wesentlichen ohne Vorzugsrichtung signifikant Strahlung 26 (gestrichelte Pfeile) in Form von Temperaturstrahlung, auch als LII-Licht bezeichnet. Ein Teil der Temperaturstrahlung 26 wird daher auch entgegengesetzt zur Richtung des einfallenden Laserlichtes 14 emittiert. Die Temperaturstrahlung 26 liegt zum Beispiel im nah-infraroten und sichtbaren Spektralbereich, ist jedoch nicht auf diesen Spektralbereich beschränkt.

Die Temperaturstrahlung 26 eines im Spot 22 durch das Laserlicht 14 angeregten Partikels 24 gelangt wiederum durch die Linse 20 zurück zum Strahlteiler 18, wo sie um 90° abgelenkt wird, durch eine Fokussierlinse 28 hindurchtritt und durch einen Filter 30 (dieser ist nicht zwingend vorhanden) zu einem Detektor 32 gelangt. Der Filter 30 ist so ausgebildet, dass er die Wellenlängen des Laserlichts 14 ausfiltert, welches in geringem Umfang ebenfalls zurückgestrahlt wird (strichpunktierte Pfeile 31). Durch den Filter 30 wird also der störende Background reduziert. Denkbar ist auch die Verwendung eines einfachen Kantenfilters. Das Signal-to-Noise-Ratio verbessert sich dadurch.

Bei einer nicht gezeigten Ausführungsform wird das Laserlicht vom Laser bis zur Fokussierlinse mithilfe eines Lichtwellenleiters und entsprechenden ein- und auskoppelnden optischen Elementen geleitet. Das Gleiche gilt auch für das zu detektierende LII-Licht. Es ist auch nicht zwingend erforderlich, dass das Laserlicht und das LII-Licht über die gleiche Linse entsprechend fokussiert und eingesammelt werden.

Die Abmessungen des Spots 22 liegen im Bereich einiger µm, insbesondere im Bereich von höchstens 200 µm, so dass den Spot 22 durchquerende Partikel 24 zur Emission auswertbarer Strahlungsleistungen angeregt werden, sei es durch laserinduzierte Inkandeszenz oder durch chemische Reaktionen (insbesondere Oxidation). Als Folge kann davon ausgegangen werden, dass sich stets höchstens ein Partikel 24 in dem Spot 22 befindet und dass ein momentanes Ausgangssignal 34 des Partikelsensors 10 nur von diesem höchstens einen Partikel 24 stammt.

Das Ausgangssignal 34 wird von dem Detektor 32 erzeugt, der im Partikelsensor 10 so angeordnet ist, dass er vom den Spot 22 durchfliegenden Partikel 24 ausgehende Strahlung 26, insbesondere Temperaturstrahlung detektiert. Insoweit ist das vom Detektor 32 bereitgestellte Ausgangssignal 34 eine die von dem Detektor 32 erfasste Temperaturstrahlung charakterisierende Größe. Der Detektor 32 umfasst bevorzugt einen Multi-Pixel-Photon-Counter (MPPC) oder einen Silicon-Photon-Multiplier (SiPM) oder eine SPAD-Diode (single-photon avalanche diode), welche(r) die Temperaturstrahlung 26 erfasst und das digitale Ausgangssignal 34 in Form von Pulsen mit einer bestimmten Spannung bzw. mit einem bestimmten Strom erzeugt. Je stärker die Temperaturstrahlung 26 ist, desto mehr Pulse pro Zeiteinheit werden ausgegeben. Damit wird eine Einzelpartikelmessung möglich, welche die Extraktion von Informationen über den Partikel 24 wie Größe und Geschwindigkeit ermöglicht.

Mit den genannten Typen von Detektoren 32 kann bereits ein von einem besonders kleinen Partikel 24 erzeugtes und daher extrem kleines Lichtsignal, das beispielsweise von wenigen Photonen gebildet wird, detektiert werden. Damit sinken die Abmessungen von Partikeln 24, die gerade noch nachweisbar sind, auf eine untere Nachweisgrenze von bis zu 10 nm ab.

Es ist durchaus möglich, dass der Laser 12 moduliert bzw. an- und ausgeschaltet wird (duty cycle < 100%). Bevorzugt bleibt jedoch, dass der Laser 12 ein CW-Laser ist. Dies ermöglicht den Einsatz von kostengünstigen Halbleiter-Laser-Elementen (Laser-Dioden), was den kompletten Partikelsensor 10 verbilligt und die Ansteuerung des Lasermoduls 12 und die Auswertung des Ausgangssignals 34 stark vereinfacht. Die Verwendung gepulster Laser ist aber nicht ausgeschlossen.

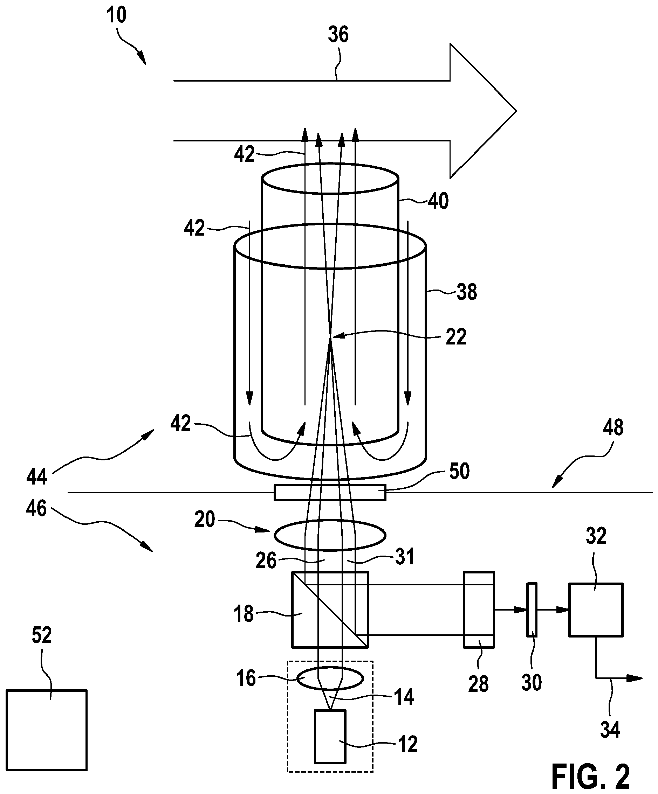

Figur 2 zeigt stärker im Detail ein vorteilhaftes Ausführungsbeispiel eines Partikelsensors 10, der sich für den Einsatz als Rußpartikelsensor in einem Abgas 36 eines Verbrennungsprozesses, beispielsweise in der Abgasanlage einer Brennkraftmaschine (Diesel oder Benzin) eines Kraftfahrzeugs, eignet. Das Abgas 36 bildet insoweit ein Beispiel eines mit einer bestimmten Geschwindigkeit strömenden Fluids, das Partikel 24 enthält.

Der Partikelsensor 10 weist eine Anordnung aus einem äußeren Schutzrohr 38 und einem inneren Schutzrohr 40 auf. Die beiden Schutzrohre 38, 40 haben bevorzugt eine allgemeine Zylinderform oder Prismenform. Die Grundflächen der Zylinderformen sind bevorzugt kreisförmig, elliptisch oder vieleckig. Die Schutzrohre 38, 40 sind bevorzugt koaxial angeordnet, wobei die Achsen der Schutzrohre 38,40 quer zur Strömung des Abgases 36 ausgerichtet sind. Das innere Schutzrohr 40 ragt in Richtung der Achsen über das äußere Schutzrohr 38 hinaus und in das strömende Abgas 36 hinein. An dem vom strömenden Abgas 36 abgewandten Ende der beiden Schutzrohre 38, 40 ragt das äußere Schutzrohr 38 über das innere Schutzrohr 40 hinaus. Die lichte Weite des äußeren Schutzrohrs 38 ist bevorzugt so viel größer als der äußere Durchmesser des inneren Schutzrohrs 40, dass sich zwischen den beiden Schutzrohren 38, 40 ein erster und vorliegend in etwa kreisringförmiger Strömungsquerschnitt ergibt. Die lichte Weite des inneren Schutzrohrs 40 bildet einen zweiten und vorliegend kreisförmigen Strömungsquerschnitt.

Diese Geometrie hat zur Folge, dass Abgas 36 über den ersten Strömungsquerschnitt in die Anordnung der beiden Schutzrohre 38, 40 eintritt, dann an dem vom Abgas 36 abgewandten Ende der Schutzrohre 38,40 seine Richtung ändert, in das innere Schutzrohr 40 eintritt und aus diesem vom vorbeiströmenden Abgas 36 herausgesaugt wird (Pfeile mit dem Bezugszeichen 42). Dabei ergibt sich im inneren Schutzrohr 40 eine laminare Strömung. Diese Anordnung von Schutzrohren 38, 40 wird quer zur Strömungsrichtung des Abgases 36 an bzw. in einem Abgasrohr (nicht gezeichnet) befestigt. Der Spot 22 befindet sich im Inneren des inneren Schutzrohrs 40. Dieser Aufbau hat den besonders wichtigen Vorteil, dass nur ein einziger optischer Zugang zum Abgas 36 benötigt wird, da die selbe Optik, insbesondere die selbe Linse 20 sowohl für die Erzeugung des Spots 22 als auch für das Erfassen der vom Partikel 24 ausgehenden Temperaturstrahlung 26 benutzt wird.

Der Partikelsensor 10 weist bevorzugt einen dem Abgas 36 ausgesetzten ersten Teil 44 (Schutzrohre 38 und 40) und einen dem Abgas 36 nicht ausgesetzten zweiten Teil 46 auf, der die optischen Komponenten des Partikelsensors 10 enthält. Beide Teile 44, 46 sind durch eine Trennwand 48 getrennt, die zwischen den Schutzrohren 38, 40 und den optischen Elementen des Partikelsensors 10 erläuft. Die Wand 48 dient zur Isolation der empfindlichen optischen Elemente gegenüber dem heißen, chemisch aggressiven und "schmutzigen" Abgas 36. In der Trennwand 48 ist im Strahlengang des Laserlichtes 14 ein Schutzfenster 50 angebracht, durch das hindurch das Laserlicht 14 in das Abgas 36 zw. die Strömung 42 einfällt und über das vom Spot 22 ausgehende Temperaturstrahlung 26 auf die Linse 20 und von dort aus über den Strahlteiler 18 und den Filter 30 auf den Detektor 32 einfallen kann.

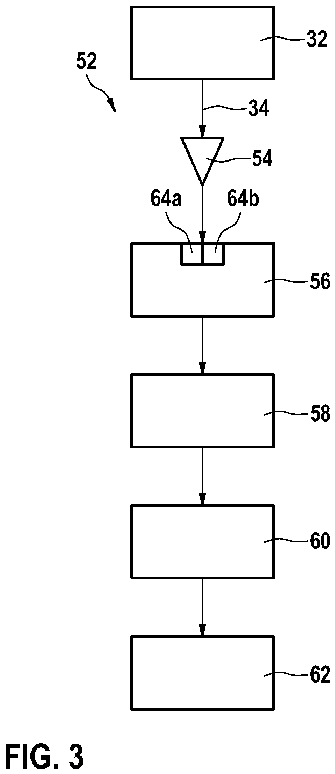

Der Partikelsensor 10 weist ferner eine Anordnung 52 zur Verarbeitung des Ausgangssignals 34 des Detektors 32 auf, welche dazu ausgebildet und eingerichtet ist, auf der Basis des Ausgangssignals 34 des Detektors 32 eine Auswertung der vom Detektor 32 bereitgestellten und die erfasste Temperaturstrahlung 26 charakterisierenden Größe durchzuführen. Hierzu verfügt die Anordnung 52 über Komponenten, die stärker im Detail in Figur 3 gezeigt sind:
Die Anordnung 52 umfasst zunächst einen Verstärker 54, der jedoch optional ist. Nach dem Verstärker 54 ist ein Summierers 56 angeordnet, und nach diesem wiederum ein Puffer 58, der jedoch ebenfalls optional ist. Ein Ausgang des Puffers 58 ist mit einer Auswerteeinrichtung 60 verbunden, die wiederum mit einer Diagnose-, Anzeige- und/oder weiteren Verarbeitungseinrichtung 62 verbunden ist. Der Integrator 57 hat vorliegend beispielhaft zwei Eingänge 64a und 64b.

Einzelne oder alle diese Elemente können in einem dedizierten ASIC integriert sein. Denkbar ist aber auch, dass einzelne Komponenten als diskrete Komponenten oder als Mikro-ASIC ausgeführt sind. Beispielsweise könnten der Verstärker 54 und der Summierers 56 als solche diskrete Komponenten oder als Mikro-ASIC realisiert werden. Denkbar ist ferner, dass einzelne oder alle der oben genannten Komponenten als Software in einem Mikrocontroller bzw. Mikroprozessor ausgeführt sind, wobei die Software auf einem entsprechenden elektrischen Speichermedium gespeichert ist. Schließlich ist auch vorstellbar, dass einzelne oder alle der oben genannten Komponenten in einem Motorsteuergerät einer Brennkraftmaschine untergebracht sind.

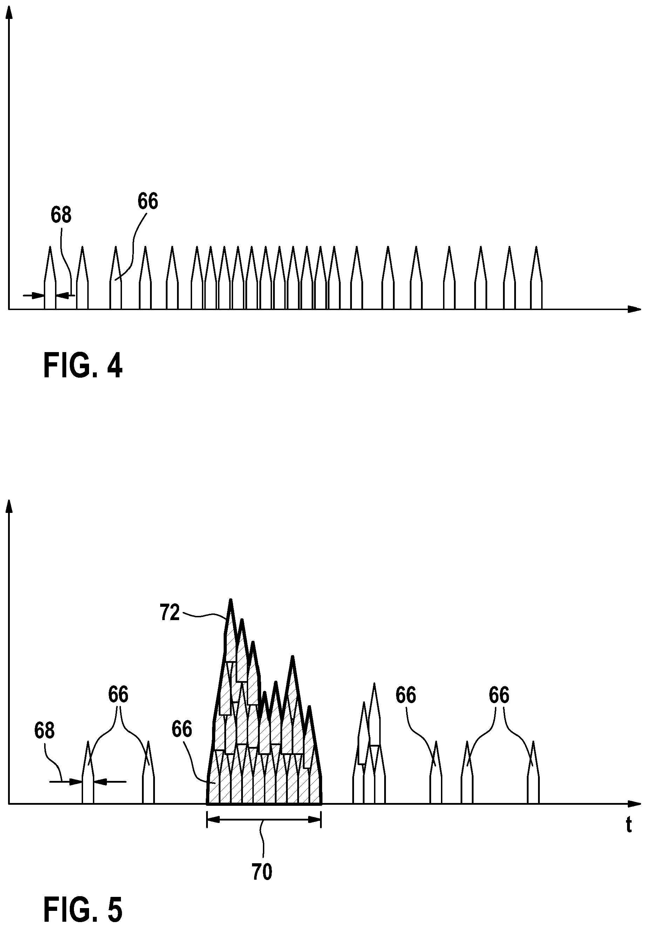

Figur 4 zeigt das digitale Ausgangssignal 34 des Detektors 32 stärker im Detail: man erkennt, dass das Ausgangssignal 34 einzelne Pulse ("single counts") umfassen kann, die mit 66 bezeichnet sind. Diese haben eine Halbwertsbreite (FWHM), die mit 68 bezeichnet ist. Der Detektor 32 detektiert einzelne Photonen mit einer sehr hohen Nachweiseffizienz. Dabei erzeugt das Photon einen sehr kurzen Strom- oder Spannungspuls 66 mit einer FWHM 68, die beispielsweise im Bereich von wenigen ns bis einigen 100ns liegen kann.

Wie aus Figur 5 hervorgeht, können bei der Detektion von großen Partikeln 24 mit einer entsprechend starken Temperaturstrahlung 26 jedoch Signalwiederholraten in der Größenordnung von GHz auftreten, es werden also innerhalb einer sehr kurzen Zeit eine Vielzahl von einzelnen Pulsen 66 erzeugt. Dies kann zu einem "Pile-Up" führen.

Als Pile-up bzw. "aufstapeln" wird vorliegend der Fall bezeichnet, dass in dem Detektor 32 mehrere elektrische Pulse 66 innerhalb einer Zeitdauer (Bezugszeichen 70 in Figur 4) erzeugt werden, die kürzer ist als die Summe der Zeitdauern (FWHMs 68) der einzelnen erzeugten elektrischen Pulse 66. Die Pulse 66 verschmelzen somit am Ausgang des Detektors 32 zu einem "Berg", der in Figur 4 durch eine dicke schwarze Linie umrandet ist, die das Bezugszeichen 72 trägt. Die gesamte Ladung (= Fläche) des Berges 72 entspricht dabei der Gesamtladung der einzelnen Pulse 66. Bei einem Pile-up wird also nur ein Ereignis (nämlich ein einziger Berg 72) mit höherer Pulshöhe statt mehrerer Ereignisse mit jeweils niedriger Pulshöhe registriert.

Üblicherweise wird ein digitales Ausgangssignal 34, entsprechend beispielsweise jenem von Figur 4, durch einen Summierers 56 in Form eines Zählers bzw. "Counters" ausgewertet, der die Anzahl der Pulse 66 pro Zeiteinheit erfasst und so auf ein Detektionsereignis, vorliegend also das Vorhandensein eines Partikels 24 im Spot 22, schließt. Dabei hängt die Anzahl der Pulse 66 pro Zeiteinheit von der Stärke der Temperaturstrahlung 26 ab. Je mehr Pulse 66 pro Zeiteinheit gezählt werden, desto stärker ist die Temperaturstrahlung 26 und desto größer ist der Partikel 24.

Wie oben dargelegt wurde, kann es jedoch sein, dass es bei sehr großen Partikeln 24 zu dem besagten Pile-up kommt, wie in Figur 5 gezeigt ist. Daher wird in einem solchen Fall das Ausgangssignal 34 ähnlich wie ein analoges Messsignal verwendet und im Summierer 56 das Integral über die einzelnen Pulse 66 (bei Einzelpulsen) sowie über den "Berg" 72 (bei einem Pile-up) mit variabler Integrationszeit gebildet. Der Summierer 56 ist also bei dieser Ausführungsform als Integrator ausgebildet, und er gibt an seinem Ausgang einen entsprechenden Wert aus.

Der Ausgang des Summierers 56 ist dabei vorzugsweise ebenfalls digital, und er ist parallel, er kann aber auch seriell sein. Vorzugsweise ist die Verschaltung derart realisiert, dass 1 Bit des Summierers 56 etwa der erwarteten Ladung eines Pulses 66 des Detektors 32 entspricht. Eine höhere Auflösung (z.B. 2 Bits pro Puls 66) ist noch vorteilhafter und erlaubt eine erweiterte Rauschfilterung. Außerdem kann der Summierer 56 durch ein äußeres Signal zurückgesetzt werden. Der Summierer 56 stellt am Ausgang ein Signal vorzugsweise mit einem Wert im Bereich von maximal ungefähr 4-16 Bit bereit, vorzugsweise im Bereich von ungefähr 8-12 Bit. Diese ergibt sich aus der Puls-Rate typischer Detektoren 32 bei den größten zu detektierenden Partikeln 24 (entsprechend einer Signalwiederholrate von z.B. ungefähr 1GHz) und einem typischen maximalen Zeitintervall (z.B. ungefähr 1 µs), woraus sich beispielhaft eine maximale Zahl von 1000 Pulsen ergibt oder ein benötigter Wert von 10 Bit (= 1024). Da der Summierer 56 einen Doppel-Eingang mit zwei Eingängen 64a und 64b hat, können die Ausgangssignale 34 vom Detektor 32 auf den einen Eingang 64a fließen, während der andere Eingang 64b ausgewertet (also integriert) wird. Danach wird umgeschaltet, so dass der eine Eingang 64a ausgewertet werden kann, während die Daten des Ausgangssignals 34 an den anderen Eingang 64b fließen.

Der Stand des Summierers 56 wird in regelmäßigen oder flexibel steuerbaren zeitlichen Abständen ausgelesen, beispielsweise einmal pro 1 µs. Die am Ausgang des Summierers 56 erhaltenen Daten könnten grundsätzlich direkt der Auswerteeinrichtung 60 zugeführt werden. Vorliegend und höchst beispielhaft werden sie jedoch dem Puffer 58 zugeführt, der eine bestimmte Anzahl, beispielsweise 100, der letzten Werte des Summierers 56 speichert und diese dann als Arbeitspaket an die Auswerteeinrichtung 60 weitergibt.

Die Auswerteeinrichtung 60 verarbeitet die vom Summierer 56 erhaltenen Daten vorliegend beispielhaft in mehreren Stufen, beispielsweise in zwei Stufen. In einer ersten Stufe werden solche Datenpakete identifiziert, die eine vorgegebene Eigenschaft aufweisen, und in einer zweiten Stufe werden nur diese identifizierten Datenpakete ausgewertet. Beispielsweise kann eine grobe Vorauswahl der "interessanten" Datenpakete durchgeführt werden, wobei ein Datenpaket dann beispielsweise als "interessant" zu klassifizieren ist, wenn es aufgrund der Größe des Integrals mit hoher Wahrscheinlichkeit auf die Detektion eines Partikels, eventuell sogar eines besonders großen Partikels 24, hinweist. Eine aufwändigere Auswertung, bei der beispielsweise die Form des Bergs 72 ermittelt und hieraus auf die Form des Partikels 24 geschlossen wird, erfolgt dann nur für ein solches ausgewähltes "interessantes" Datenpaket. Die Auswertung der vom Summierer 56 ausgelesenen Daten in der Auswerteeinrichtung 60 kann unter Verwendung von Triggering, Datenfitting, neuronalen Netzwerken, Machine-Learning und/oder KI-Verfahren (KI = Künstliche Intelligenz) erfolgen.

Grundsätzlich denkbar wäre aber auch, dass der Puffer 58, der im Übrigen grundsätzlich auch in die Auswerteeinrichtung 60 integriert sein kann, permanent ausgelesen wird, beispielsweise eine bestimmte Anzahl von Werten einmal pro Zeiteinheit ausgelesen wird. Insbesondere können 100 10-Bit-Zahlen einmal pro µs ausgelesen werden. Derartig permanent ausgelesene Daten könnten dann mittels einer sehr schnellen Auswertung mit hoher Frequenz, beispielsweise 1 MHz, verarbeitet werden.

Nun wird unter Bezugnahme auf Figur 5 ein Verfahren zur Verarbeitung des Signals 34 des Partikelsensors 10 erläutert. Das Verfahren beginnt in einem Startblock 74. In einem Block 76 wird das digitale Ausgangssignal 34 durch den Detektor 32 bereitgestellt. In einem Block 78 wird das Ausgangssignal 34 dem Summierer 56 zugeführt. Der Summierer 56 ist als Integrator ausgebildet, folglich wird in einem Block 80 das Ausgangssignal 34 durch den über ein Zeitintervall integriert. In einem Block 84 werden die in den Puffer 58 gelangenden Werte zu Datenpaketen gesammelt, und in einem Block 86 werden die gesammelten Datenpakete der Auswerteeinrichtung 60 zugeführt. In einem Block 88 werden die Datenpakete in der Auswerteeinrichtung 60 ausgewertet. Das Verfahren endet in einem Block 90.

## Patentansprüche

1. Verfahren zur Verarbeitung des Ausgangssignals (34) eines Partikelsensors (10), der nach dem Prinzip der laserinduzierten Inkandeszenz arbeitet, welches den Schritt umfasst: Bereitstellen eines Ausgangssignals (34) an einem Detektor (32), welches eine von dem Detektor (32) erfasste Temperaturstrahlung (26) charakterisiert, indem der Detektor ein Multi-Pixel-Photon-Counter (MPPC) oder ein Silicon-Photon-Multiplier (SiPM) ist, und einzelne Photonen durch Erzeugen eines Pulses in seinem Ausgang detektiert, wobei das Verfahren ferner folgende Schritte umfasst:
a. Bereitstellen eines Ausgangssignals (34) durch den Detektor (32), wobei das Ausgangssignal (34) eine Mehrzahl von Pulsen (66) umfasst, und
b. wenigstens zeitweise: Zuführen des Ausgangssignals (34) zu einem Summierer (56), und
c. Summieren des Ausgangssignals (34) durch den Summierer (56) über ein Zeitintervall, wobei wenigstens zeitweise ein Zeitraum (70), in dem zwei unmittelbar aufeinander folgende Pulse (66) ausgegeben werden, kleiner ist als die Gesamtbreite der beiden Pulse (66), so dass es zu einem "pile-up" kommt, und wobei der Summierer (56) ein Integrator ist, der das Ausgangssignal (34) über ein Zeitintervall integriert.

2. Verfahren nach wenigstens einem der vorhergehenden Ansprüche, **dadurch gekennzeichnet, dass** die Dauer des Zeitintervalls variabel ist.

3. Verfahren nach wenigstens einem der vorhergehenden Ansprüche, **dadurch gekennzeichnet, dass** der Ausgang des Summierers (56) digital und vorzugsweise parallel ist.

4. Verfahren nach Anspruch 3, **dadurch gekennzeichnet, dass** 1 Bit am Ausgang des Summierers (56) höchstens ungefähr dem erwarteten Integral der Spannung bzw. des Stroms eines einzelnen Pulses (66) entspricht, vorzugsweise ungefähr dem erwarteten Integral der Spannung bzw. des Stroms eines halben einzelnen Pulses (66) entspricht.

5. Verfahren nach wenigstens einem der vorhergehenden Ansprüche, **dadurch gekennzeichnet, dass** der Summierer (56) durch ein äußeres Signal zurückgesetzt werden kann, insbesondere nach Ablauf eines bestimmten Zeitintervalls nach einem letzten Zurücksetzen zurückgesetzt werden kann.

6. Verfahren nach wenigstens einem der vorhergehenden Ansprüche, **dadurch gekennzeichnet, dass** der Stand des Summierers (56) in zeitlichen Abständen ausgelesen wird, wobei die zeitlichen Abstände fest oder flexibel steuerbar sind.

7. Verfahren nach wenigstens einem der vorhergehenden Ansprüche, **dadurch gekennzeichnet, dass** aus dem Summierer (56) ausgelesene Daten zunächst einem Puffer (58) zugeführt werden, der permanent ausgelesen wird, insbesondere nach Erhalt einer bestimmten Datenmenge ausgelesen wird.

8. Verfahren nach wenigstens einem der Ansprüche 1-4, **dadurch gekennzeichnet, dass** aus dem Summierer (56) ausgelesene Daten zunächst einem Puffer (58) zugeführt werden, eine bestimmte Anzahl der zuletzt erhaltenen Daten in dem Puffer (58) gespeichert wird, und diese gespeicherte Anzahl dann als Datenpaket an eine Auswerteeinrichtung (60) ausgegeben wird.

9. Verfahren nach wenigstens einem der vorhergehenden Ansprüche, **dadurch gekennzeichnet, dass** aus dem Summierer (56) ausgelesene Daten einer Auswerteeinrichtung (60) zur Verfügung gestellt werden, welche die erhaltenen Daten in Stufen verarbeitet, wobei in einer ersten Stufe solche Datenpakete identifiziert werden, die eine vorgegebene Eigenschaft aufweisen, und in einer zweiten Stufe nur diese identifizierten Datenpakete ausgewertet werden.

## Claims

1. Method for processing the output signal (34) from a particle sensor (10) that operates according to the principle of laser-induced incandescence, comprising the step of: providing an output signal (34) on a detector (32), which characterizes a thermal radiation (26) detected by the detector (32), by virtue of the detector being a multi-pixel photon counter (MPPC) or a silicon photon multiplier (SiPM) and detecting individual photons by generating a pulse in its output, the method further comprising the following steps of:
a. providing an output signal (34) by way of the detector (32), the output signal (34) comprising a plurality of pulses (66), and
b. at least intermittently: supplying the output signal (34) to a summator (56), and
c. summing the output signal (34) by way of the summator (56) over a time interval, a period of time (70) in which two directly successive pulses (66) are output being, at least intermittently, shorter than the total width of the two pulses (66), with the result that a "pile-up" occurs, and the summator (56) being an integrator that integrates the output signal (34) over a time interval.

2. Method according to at least one of the preceding claims, **characterized in that** the length of the time interval is variable.

3. Method according to at least one of the preceding claims, **characterized in that** the output of the summator (56) is digital and preferably parallel.

4. Method according to Claim 3, **characterized in that** 1 bit at the output of the summator (56) corresponds at most approximately to the expected integral of the voltage or the current of an individual pulse (66), preferably corresponds approximately to the expected integral of the voltage or the current of half an individual pulse (66).

5. Method according to at least one of the preceding claims, **characterized in that** the summator (56) can be reset by an external signal, in particular can be reset after a specific time interval has elapsed after a last reset.

6. Method according to at least one of the preceding claims, **characterized in that** the reading on the summator (56) is read at intervals of time, the intervals of time being fixed or flexibly controllable.

7. Method according to at least one of the preceding claims, **characterized in that** data read from the summator (56) are initially supplied to a buffer (58) that is continually read, in particular is read after a specific volume of data has been received.

8. Method according to at least one of Claims 1-4, **characterized in that** data read from the summator (56) are initially supplied to a buffer (58), a specific number of the most recently received data is stored in the buffer (58), and this stored number is then output to an evaluation device (60) as a data packet.

9. Method according to at least one of the preceding claims, **characterized in that** data read from the summator (56) are made available to an evaluation device (60) that processes the received data in stages, a first stage comprising identifying data packets that have a predefined property and a second stage comprising evaluating only these identified data packets.

## Revendications

1. Procédé permettant de traiter le signal de sortie (34) d'un capteur de particules (10) fonctionnant selon le principe de l'incandescence induite par laser, comprenant l'étape consistant à : fournir un signal de sortie (34) au niveau d'un détecteur (32) qui caractérise un rayonnement thermique (26) détecté par le détecteur (32) en ce que le détecteur est un compteur de photons à pixels multiples (MPPC) ou un multiplicateur de photons à base de silicium (SiPM) et détecte des photons individuels en générant une impulsion au niveau de sa sortie, le procédé comprenant en outre les étapes suivantes consistant à :
a) fournir un signal de sortie (34) par le détecteur (32), le signal de sortie (34) comprenant une pluralité d'impulsions (66), et
b) au moins temporairement : amener le signal de sortie (34) à un sommateur (56), et
c) additionner le signal de sortie (34) par le sommateur (56) sur un intervalle de temps, dans lequel au moins temporairement une période de temps (70) dans laquelle deux impulsions (66) directement consécutives sont sorties est inférieure à la largeur totale des deux impulsions (66) de sorte qu'il en résulte une accumulation, et dans lequel le sommateur (56) est un intégrateur qui intègre le signal de sortie (34) sur un intervalle de temps.

2. Procédé selon au moins l'une des revendications précédentes, **caractérisé en ce que** la durée de l'intervalle de temps est variable.

3. Procédé selon au moins l'une des revendications précédentes, **caractérisé en ce que** la sortie du sommateur (56) est numérique et de préférence parallèle.

4. Procédé selon la revendication 3, **caractérisé en ce que** 1 bit à la sortie du sommateur (56) correspond au maximum approximativement à l'intégrale attendue de la tension ou du courant d'une seule impulsion (66), de préférence approximativement à l'intégrale attendue de la tension ou du courant d'une seule demi-impulsion (66) .

5. Procédé selon au moins l'une des revendications précédentes, **caractérisé en ce que** le sommateur (56) peut être réinitialisé par un signal externe, en particulier après expiration d'un intervalle de temps déterminé après une réinitialisation précédente.

6. Procédé selon au moins l'une des revendications précédentes, **caractérisé en ce que** le niveau du sommateur (56) est lu à des intervalles de temps, les intervalles de temps étant fixes ou pouvant être commandés de manière flexible.

7. Procédé selon au moins l'une des revendications précédentes, **caractérisé en ce que** les données lues sur le sommateur (56) sont d'abord amenées à une mémoire tampon (58) qui est lue en permanence, en particulier après réception d'une quantité de données déterminée.

8. Procédé selon au moins l'une des revendications 1 à 4, **caractérisé en ce que** des données lues sur le sommateur (56) sont d'abord amenées à une mémoire tampon (58), un nombre déterminé des données reçues en dernier est stocké dans la mémoire tampon (58), et ce nombre stocké est ensuite sorti sous forme de paquet de données à un dispositif d'évaluation (60).

9. Procédé selon au moins l'une des revendications précédentes, **caractérisé en ce que** les données lues sur le sommateur (56) sont mises à la disposition d'un dispositif d'évaluation (60) qui traite les données reçues par étapes, dans lequel dans une première étape, les paquets de données sont identifiés qui présentent une propriété prédéfinie, et dans une deuxième étape, seuls ces paquets de données identifiés sont évalués.
